# EUROPEAN PATENT APPLICATION

(11) **EP 4 645 013 A1**
(43) Date of publication of application: **05.11.2025**
(21) Application number: 24173030.8
(22) Date of filing: 29.04.2024
(51) Int. Cl.: G05B 23/02

(54) **ENTERPRISE OBSERVABILITY AND VISUALIZATION FRAMEWORK FOR INDUSTRIAL PLANTS**

(71) Applicant: ABB SCHWEIZ AG, 5400 Baden (CH)
(72) Inventor: KOZIOLEK, Heiko, 76227 Karlsruhe (DE); LINSBAUER, Sofia, 69221 Dossenheim (DE); SAHLAB, Nada, 68159 Mannheim (DE); KOHNHAEUSER, Florian, 64560 Riedstadt (DE)
(74) Representative: Maiwald GmbH

(57) **Abstract**

The present invention relates to a method for providing observability data in industrial plant. The method comprises obtaining, at a first local observer associated with a first distributed control system, DCS, first data indicative of first observability data associated with the first DCS. The method further comprises pre-processing the first data. The method further comprises providing the pre-processed first data to a global observer for joint processing of the pre-processed first data and pre-processed second data indicative of second observability data associated with a second DCS.

## Description

### FIELD OF THE INVENTION

The invention relates to an enterprise observability and visualization framework for industrial plants.

### BACKGROUND

Nowadays, in an enterprise comprising different production sites, a huge amount of data can be obtained for each production site and can then be used to derive system diagnostic insights per each production site, which is urgently needed. In particular, regarding containerized distributed control systems (DCSs), a containerized DCS associated with a production site needs adequate observability, i.e. the ability to provide a user with an understanding of its inner workings based on metrics, logs, and traces, for example. However, satisfying such requirements in an efficient, insightful and secure manner is challenging. For example, the exposure of sensitive site data through possibly unsafe internet connections needs to be considered. Moreover, restrictions may apply due to security or privacy concerns, since sensitive data can include, for example, data about industrial processes comprising secret ingredients, can include confidential data about industrial systems comprising secret optimization algorithms, and can include customer data or user data from operators for example. Hence, there is room for improvement.

### SUMMARY

In view of the above, it is an object of the present disclosure to overcome at least part of these nowadays available drawbacks regarding the derivation of system diagnostic insights for containerized DCSs in industrial plant.

Thus, according to several examples of the present disclosure, there is described a multi-site observability system for containerized DCSs that focuses on data collection, aggregation, and analysis. The described multi-site observability system may be understood to represent a cloud-native observability solution, which considers data reflecting the state of virtualized environments and control applications. It shall be noted that the term "containerized" comprises an increased use of microservice architecture and cloud-native applications.

In view of the above, to address one or more of these drawbacks, there is provided, in a first aspect, a method for providing observability data in industrial plant. The method comprises obtaining, at a first local observer associated with a first DCS, first data indicative of first observability data associated with the first DCS. The method further comprises pre-processing the first data. The method further comprises providing the pre-processed first data to a global observer for joint processing of the pre-processed first data and pre-processed second data indicative of second observability data associated with a second DCS.

It shall be noted that, throughout the present application, by a local observer it may be meant an observer, which is associated with a DCS and which observes the DCS. The DCS may represent a containerized DCS. The association may be an "one to one"-association, i.e. one local observer may be associated with one DCS only and the one DCS may be associated with the one local observer only. Hence, the term "local" may be understood in that the observability of the local observer (or site-corresponding observer for example) may be limited on its one associated DCS and/or on its one (production) site. Thus, the observability may be on a local level. In contrast thereto, by a global observer it may be meant an observer, which is associated with several local observers and which is communicatively connected with such several local observers. Hence, it may be understood that the global observer is associated with several DCSs via their respectively associated local observers. Hence, the term "global" may be understood in that there may be no limitation on a single DCS, i.e. there may be an "one to many"-association between the global observer and the several local observers. Thus, the observability may be on a global level, i.e. above the local level. Moreover, by observer it may be meant any apparatus, device, entity or function, which is configured to observe a DCS, comprising to observe an operation and/or functionality of the DCS. Observing may comprise at least one of monitoring data, obtaining data, storing data, and analyzing data. The global observer may be hosted on a cloud and apply analytics services offered, for example.

According to several examples of the present disclosure, in an industrial plant of an enterprise, an end product "A" may be produced at an "end product production site" and intermediate products "B" and "C" may be produced at "intermediate product production sites". The intermediate products "B" and "C" are required for the production of the end product "A". Each of the "end product production site" and the "intermediate product production sites" is associated with its own DCS and has its own local observer. Hence, a global observer on a global observability level of this assumed enterprise may, for example, analyze observability data obtained from the local observers corresponding to the "intermediate product production sites" to gain insights for the DCS associated with the "end product production site". Such insights may refer to software configurations and/or hardware configurations available at the associated DCS, for example.

It shall further be noted that, throughout the present application, a configuration or architecture may comprise additional observers between the local observer level and the global observer level, for example one or more site-level observers on a site-level observer level, in case one site may comprise more than one local observer (and thus more than one DCS). Hence, for example, a global observer may be associated with several site-level observers and a site-level observer may be associated with several local observers.

It shall further be noted that, throughout the present application, a DCS or containerized DCS may be associated with a production site or site, wherein the association may be an "one to one"-association.

Moreover, throughout the present application, observability data may be understood to comprise at least one of structured, string-based log messages, time-series-based metrics, and system traces describing component interactions. The component interactions may be related to components that are used or available at a DCS.

It shall be noted that logs may reflect on expected or anomalous states via structured messages, while metrics may reflect on a CPU and memory consumption over time, for example. Further, traces may show a communication between system components for specific requests and their respective durations, for example. Moreover, observability data may reflect a system status, i.e. a status of the DCS, and inner application behavior, of the DCS, and may be used for diagnosis in case of failures, for example. Hence, throughout the present disclosure according to several examples, the observability data are selected to address observability for information technology (IT) data not operational technology (OT) data.

The method according to the first aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the method enables for deriving system diagnostic insights at an enterprise level based on data aggregated from different production sites, each equipped with their own DCS. In doing so, based on the pre-processing, the method further participates in enabling data heterogeneity and in reducing data volumes across different production sites. Moreover, the method further enables to devise a solution to the required computing and storage resources for collecting and processing data from each site to gain enterprise-level insights.

Furthermore, according to several examples of the present disclosure, the obtaining of the first data may comprise collecting the first observability data, wherein the first observability data comprises at least one of a structured message, a string-based log message, a time-series-based metric, a system trace, and an indication about a consumption of computing resources. Observability data may comprise data for observing IT data.

Therefore, by collecting such different data and such different types of data, a basis is provided for an extensive analysis of a DCS. Hence, more valuable, more detailed and more appropriate insights may be gained for a DCS.

Furthermore, according to several examples of the present disclosure, the pre-processing of the first data obtained at the first local observer associated with the first DCS may comprise at least one of performing data aggregation, performing data cleaning, performing data filtering, performing time-series analysis, querying textual input of a string-based log message, performing classification based on recurrent fields, and performing classification based on a recurrent log types.

For example, regarding data aggregation according to several examples of the present disclosure, on a production site level, pre-defined aggregation thresholds may be used to summarize data, for example to summarize unified data, and to calculate, from the data or the summarized data, average values for metrics as well as to detect peak values in the data or in the summarized data, for example. Hence, temporal data aggregation may be performed and such aggregated data may be published to the global observer. Regarding data cleaning according to several examples of the present disclosure, possibly missing metrics may be compensated for, wherein regarding data filtering according to several examples of the present disclosure, inconsistent and/or duplicated values may be filtered. Regarding time-series analysis according to several examples of the present disclosure, data analyzation over time may be performed. Regarding querying textual input of a string-based log message according to several examples of the present disclosure, the queried, acquired or derived textual input may be used for classification purposes, for example a classification based on recurrent fields and/or log types. Log types according to several examples of the present disclosure may comprise at least one of an information, a warning, and an error.

Therefore, due to such pre-processing at the local observer level, an extent of processing at the global observer level may be reduced. Hence, the global observer may be relieved and an overall analyzation of observability data may be performed more efficiently.

Furthermore, according to several examples of the present disclosure, the pre-processing may comprise omitting sensitive information from the first data by at least one of aggregating the first data, filtering the first data, adding controlled randomness, and by adding controlled noise.

For example, omitting sensitive information may comprise that location information and/or operator-specific information are filtered out or are obfuscated to ensure data privacy. A needed degree of filtering and/or aggregation may be determined using differential privacy approaches. If filtering and/or aggregation alone may not be sufficient to ensure data sensitivity, controlled randomness and/or noise may be inserted into the exported data. Alternatively, controlled randomness and/or noise may be applied alone or prior to any filtering and/or aggregation processes. Noise may make it difficult for an external observer to derive sensitive information from the data to be secured. A level of noise added may be carefully calibrated to balance sensitivity and data utility.

Therefore, protection of sensitive data is ensured, and user acceptance is thus increased.

Furthermore, according to several examples of the present disclosure, the method may further comprise visualizing a result of the pre-processing to a user.

Thus, user feedback or user control may be considered, and the pre-processing may be performed again based on received additional user feedback or user control, before publishing the pre-processed data to the global observer. Hence, the global observer may be further relieved and the insights to be gained from the observability data are further improved.

Moreover, there is provided, in a second aspect, a method for analyzing observability data in industrial plant. The method comprises obtaining, at a global observer communicatively connected with a first local observer associated with a first DCS and a second local observer associated with a second DCS, pre-processed first data indicative of first observability data associated with the first DCS and pre-processed second data indicative of second observability data associated with the second DCS. The method further comprises joint processing of the pre-processed first data and the pre-processed second data. The method further comprises, based on a result of the joint processing, taking measures for supporting troubleshooting across the first DCS and the second DCS.

It shall be noted that the joint processing may be understood in that the pre-processed first data and the pre-processed second data are considered as one common set of data, and that such common set of data is further processed. Hence, an isolated analyzation of the pre-processed first data and an isolated analyzation of the pre-processed second data, which may be performed at the respective local observers, may be exceeded.

It shall further be noted that by taking measures, any measures may be considered comprising rather passive measures, like a visual presentation to a user for example, and rather active measures, like triggering changes in a local observer's data observation process for example.

Therefore, based on the joint processing, taken measures may support at least one of cross-site troubleshooting, root cause analysis, and long-term optimization. For example, based on insights gained regarding the first local observer, support for the second local observer may be provided. Such support may comprise, for example applying a more accurate predictive maintenance, reducing software and/or hardware architectural errors regarding a scheduled software and/or hardware update, and increasing efficiency in the application of analytics algorithms and machine learning/artificial intelligence models. Additionally or alternatively, such support may comprise cross-site troubleshooting, comprising the avoidance or handling of an error at the first DCS based on insights gained for the second DCS for example, root cause analysis, comprising the identification of an error's origin at the first DCS based on insights gained for the second DCS for example, and long-term optimization, comprising the long-term reduction or avoidance of errors occurring at the first DCS based on insights gained for the second DCS for example.

Hence, the method according to the second aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the method enables for deriving system diagnostic insights at an enterprise level based on data aggregated from different production sites, each equipped with their own DCS. In doing so, based on the pre-processed data, the method further participates in enabling data heterogeneity and in reducing data volumes across different production sites. Moreover, the method further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level.

Furthermore, according to several examples of the present disclosure, the joint processing may comprise obtaining third data based on consolidating and/or aggregating and/or unifying the pre-processed first data and the pre-processed second data; and analysing the obtained third data.

According to several examples regarding the obtainment and analysing of the third data, for example, data received at the global observer may be stored in a neutral format according to a pre-defined schema as a template to unify different data types, by defining respective fields for example. The different data types may comprise logs, metrics and traces. Then, further data incoming at the global observer may analysed with unified observability data across plants. Moreover, values for a same observability data type may be summarized, log entries may be counted and average values for log rates and metrics such as CPU and memory utilizations may be calculated and stored as global values for visualization on the global observer, for example. Moreover, site information, which may be permissible to share may be found as meta information in the headers of the data unification template, facilitating querying specific site observability data, for example.

Hence, data heterogeneity is increased and an efficiency in analyzation of observability data on the global observer level is increased.

Furthermore, according to several examples of the present disclosure, the analysing may comprise detecting anomalies based on at least one of:
- executing cross-site analysis on the third data,
- executing a cross-site security breach detection on the third data,
- executing a cross-site anomaly detection on the third data,
- executing a cross-site anomaly prediction on the third data,
- deriving from the third data statistics related to the first DCS and/or the second DCS,
- analysing the derived statistics,
- deriving from the third data trends related to the first DCS and/or the second DCS,
- analysing the derived trends, and
- analysing an observability coverage based on the third data.

For example, anomalies may be detected from the third data, wherein the anomalies are values above calculated averages, for example, which can occur for specific sites. These anomalies may be analysed with respect to their temporal occurrence, their count as well as the percentage deviation from the average value. Using methods such as a sliding time window, for example, an anomaly predictor may predict future anomalies that could possibly occur for either the same site or other sites, i.e. for the first DCS and/or the second DCS, in case of a detected pattern, for example. The detected pattern may be a pattern of anomalies detected in at least part of the third data. Additionally or alternatively, according to various examples of the present disclosure, trend analysis may show a distribution of anomalies over time across different sites to derive insights about possible causes. In this case, further contextualization and correlation methods may be applied for example. Contextualization can include temporal information as well as component information. A component failure for example can be known by respective log messages. Events occurring prior or post to the failure can be provided to a user as possible indications for causes of failures or failure propagations. On the global observer level, contextualization can be cross-site in case of detected patterns or similarity, for example similar component failure in another site.

Hence, insights to be gained for a single DCS are increased and improved.

Furthermore, according to several examples of the present disclosure, the taking measures may comprise at least one of:
- setting, based on the third data, thresholds for metrics related to the first DCS and/or the second DCS,
- instructing changes to a data collection performed by the first local observer and/or the second local observer,
- instructing changes to a monitoring function of the first local observer and/or the second local observer, and
- visualizing the result of the joint processing to a user.

The visualizing may comprise a dynamic switching through different visualizations.

For example, from data from different sites, for example in an consolidated and/or aggregated state, statistics may be derived, trends may be learned, and, as an example for taking measure, target thresholds for metrics comprising a number of replicas of a component, for example, may be set based on learned typical values. Additionally or alternatively, it may be analyzed an observability coverage on a global level, and, as an example for taking measure, local observers may be instructed to enhance or optimize their data collection and/or monitoring functions based on cross-site analytics across the third data, for example. Hence, there is enabled a navigation through different views of analysis results in different time ranges, for different sites as well as cross-site analysis. Regarding the observability coverage, according to several examples of the present disclosure, there may be used fields reflecting sources of logs and metrics from different data, for example, and a coverage score for similar sources may be calculated. Sources may be understood as software components on a host, node or application level within a virtualized environment, for example. Similarities in the source field can be semantically analyzed, assuming that a similar or the same naming of system components is utilized by DCSs, for example the first DCS and the second DCS. Results regarding the observability coverage can be made available to corresponding sites. These results can help operators and IT administrators to enhance an employed observability data collection, for example.

Hence, insights to be gained for a single DCS are increased and improved.

Moreover, there is provided, in a third aspect, a method for providing and analysing observability data in an observability system in industrial plant. The method comprises obtaining, according to such obtaining according to the method of the first aspect, at local observers each associated with a corresponding DCS respective data indicative of observability data associated with the corresponding DCSs. The method further comprises pre-processing, according to such pre-processing according to the method of the first aspect, the respective data. The method further comprises providing, according to such pre-processing according to the method of the first aspect, the pre-processed respective data to a global observer. The method further comprises obtaining, according to such pre-processing according to the method of the second aspect, the pre-processed respective data. The method further comprises joint processing, according to such pre-processing according to the method of the second aspect, of the pre-processed respective data. The method further comprises, based on a result of the joint processing, taking measures according to such pre-processing according to the method of the second aspect, for supporting troubleshooting across the DCSs.

Hence, the method according to the third aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the method enables for deriving system diagnostic insights at an enterprise level based on data aggregated from different production sites, each equipped with their own DCS. In doing so, based on the pre-processed and joint processed data, the method further participates in enabling data heterogeneity and in reducing data volumes across different production sites. Moreover, the method further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level. Further, enhanced security for sensitive data is ensured.

According to a fourth aspect, there is provided a data processing apparatus, the data processing apparatus comprising a processor being configured to carry out the above-outlined method of the first aspect and/or the above-outlined method of the second aspect.

It shall be noted that the data processing apparatus configured to carry out the above-outlined method of the first aspect may represent such local observer as outlined above with reference to the methods of the first, second and third aspect. Further, the data processing apparatus configured to carry out the above-outlined method of the second aspect may represent such global observer as outlined above with reference to the methods of the first, second and third aspect.

Hence, the data processing apparatus according to the fourth aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the data processing apparatus enables for deriving system diagnostic insights at an enterprise level based on data aggregated from different production sites, each equipped with their own DCS. In doing so, based on the pre-processed and joint processed data, the data processing apparatus further participates in enabling data heterogeneity and in reducing data volumes across different production sites. Moreover, the data processing apparatus further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level. Further, enhanced security for sensitive data is ensured.

According to a fifth aspect, there is provided an observability system or data processing system comprising a first data processing apparatus according to the fourth aspect and a second data processing apparatus according to the fourth aspect, the first data processing apparatus configured to carry out the method of the first aspect, the second data processing apparatus configured to carry out the method of the second aspect, and wherein the first data processing apparatus and the second data processing apparatus are directly or indirectly communicatively connected. Additionally or alternatively, the observability system or data processing system comprises means to carry out the above-outlined method of the third aspect.

Hence, the observability system according to the fifth aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the observability system enables for deriving system diagnostic insights at an enterprise level based on data aggregated from different production sites, each equipped with their own DCS. In doing so, based on the pre-processed and joint processed data, the observability system further participates in enabling data heterogeneity and in reducing data volumes across different production sites. Moreover, the observability system further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level. Further, enhanced security for sensitive data is ensured.

Furthermore, according to several examples of the present disclosure, in the observability system, the first data processing apparatus may represent a local observer and the second data processing apparatus may represent a global observer. According to several examples of the present disclosure, the local observer may comprise a metrics analyzer, a log parser and analyer, a visualization component and an aggregator and export configurator. The metrics analyzer may be communicatively connected with the visualization component and the aggregator and export configurator, the log parser and analyer may be communicatively connected with the visualization component and the aggregator and export configurator. The metrics analyzer may have an interface to a software service logs database, the log parser and analyer may have an interface to a hardware/software metrics database, the aggregator and export configurator may have an interface to a site observability data store, and the visualization component may have an interface for communicating with a user. The metrics analyzer and the log parser and analyer may be configured to perform the obtaining via their interfaces to the databases and may be configured to perform the pre-processing according to the method of the first aspect. The aggregator and export configurator may be configured to perform the providing according to the method of the first aspect, based on storing data received from the metrics analyzer and the log parser and analyer in the site observability data store. The visualization component may be configured to perform the visualizing according to the method of the first aspect. According to several examples of the present disclosure, the global observer may comprise a data unification component, an interpreter and a visualization component. The data unification component may be communicatively connected with the interpreter and the interpreter may be communicatively connected with the visualization component. The data unification component may have one or more interfaces to one or more site observability data store corresponding to one or more local observer and the visualization component may have an interface for communicating with a user. The data unification component may be configured to perform the obtaining according to the method of the second aspect, based on pulling pre-processed data from the one or more site observability data store. The interpreter may be configured to perform the joint processing according to the method of the second aspect. The interpreter and/or the visualization component may be configured to perform the taking measures according to the method of the second aspect.

According to a sixth aspect, there is provided an industrial automation system comprising the observability system according to the fifth aspect,
Hence, the industrial automation system according to the sixth aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the industrial automation system enables for deriving system diagnostic insights at an enterprise level based on data aggregated from different production sites, each equipped with their own DCS. In doing so, based on the pre-processed and joint processed data, the industrial automation system further participates in enabling data heterogeneity and in reducing data volumes across different production sites. Moreover, the industrial automation system further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level. Further, enhanced security for sensitive data is ensured.

According to a seventh aspect, there is provided a computer-readable medium comprising instructions which, when executed by a computing system, cause the computing system to perform the method of the first aspect and/or of the second aspect and/or of the third aspect. The computer-readable medium may be transitory or non-transitory, volatile or non-volatile.

Hence, the computer-readable medium according to the seventh aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the computer-readable medium enables for deriving system diagnostic insights at an enterprise level based on data aggregated from different production sites, each equipped with their own DCS. In doing so, based on the pre-processed and joint processed data, the computer-readable medium further participates in enabling data heterogeneity and in reducing data volumes across different production sites. Moreover, the computer-readable medium further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level. Further, enhanced security for sensitive data is ensured.

According to an eight aspect, there is provided a computer program product comprising instructions which, when executed by a computing system, enable or cause the computing system to perform the method of the first aspect and/or of the second aspect and/or of the third aspect. The computer program product may comprise a computer-readable medium comprising instructions of the computer program product.

Hence, the computer program product according to the eight aspect is advantageous in several ways. For example, in addition to observability for a single DCS, there is enabled an aggregated view on DCSs and/or containerized DCSs in multiple sites. Hence, this provides additional insights for one DCS based on the insights gained for a plurality of DCSs. Said in other words, based on the knowledge gained from a plurality of DCSs, insights for a single DCS may be gained, which may not be obtainable from analyzing the single DCS alone. Thus, the enabled aggregated view on containerized DCSs in multiple sites supports cross-site troubleshooting, root cause analysis, and long-term optimization, for example. Regarding the cross-site troubleshooting, several or all considered sites may belong to a same enterprise, so such cross-site troubleshooting can take place for similarly operating DCSs. Hence, the computer program product enables for deriving system diagnostic insights at an enterprise level based on data aggregated from different production sites, each equipped with their own DCS. In doing so, based on the pre-processed and joint processed data, the computer program product further participates in enabling data heterogeneity and in reducing data volumes across different production sites. Moreover, the computer program product further enables to devise a solution to the required computing and storage resources for collecting and processing data from each site to gain enterprise-level insights. In addition, the measures to be taken may be more effective and more appropriate. Moreover, based on the cross-analyzation of pre-processed data obtained from different local observers, additional insights may be gained and, thus, additional measures may be taken or provided. Furthermore, an amount of downtime is reduced, for example since a total amount of data to be processed at the global observer level is reduced based on the pre-processing performed at the local observer level. Further, enhanced security for sensitive data is ensured.

The method of the first aspect and/or of the second aspect and/or of the third aspect may be computer implemented.

Optional features of the first aspect and/or the second aspect and/or the third aspect may form part of any of the fourth to eight aspects, mutatis mutandis.

By "industrial automation system", according to several examples, it may be meant an industrial plant or production plant comprising software and/or hardware components, like sensors and actuators for example, applied to automate and/or control an industrial process.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 schematically illustrates an architecture comprising a global observer and several local observers according to several examples of the present disclosure;
- Figure 2 illustrates a flowchart indicative of a method according to several examples of the present disclosure;
- Figure 3 illustrates a flowchart indicative of a method according to several examples of the present disclosure;
- Figure 4 illustrates a flowchart indicative of a method according to several examples of the present disclosure;
- Figure 5 schematically illustrates a local observer according to several examples of the present disclosure;
- Figure 6 schematically illustrates a global observer according to several examples of the present disclosure; and
- Figure 7 illustrates a flowchart indicative of a method for observatory data coverage determination according to several examples of the present disclosure.

### DETAILED DESCRIPTION

According to several examples of the present disclosure, there is provided an enterprise-level observability system consisting of multiple layers of observers, at least one at a local DCS level and at least one on a global enterprise level.

For example, a local observer at the local DCS level of the observability system collects observability data, like logs, metrics and/or traces for example, and provides monitoring functions to a DCS user, which is a user of a DCS associated with local observer. The local observer aggregates collected data and pre-processes the aggregated collected data for further analysis by a global observer at the global enterprise level.

The global observer consolidates and analyses aggregated data from the multiple local observers, each associated with a respective DCS. Analytical functions executed by the global observer may include cross-site security breach detections or cross-site anomaly detections. The global observer may have three main components for data unification, data interpretation, and data visualization, i.a. a data unification component, an interpreter and a visualization component. The global observer consolidates data from different sites and aggregates them to derive statistics, learn trends, and set target thresholds for metrics, like a number of replicas of a component for example, based on learned typical values. Furthermore, the global observer may be equipped with an observability scanner, which analyses observability coverage globally, and instructs local observers to enhance or optimize their data collection and monitoring functions based on cross-site analytics. For instructing local observers, the global observer, its component for data interpretation and/or the observability scanner may be communicatively connected with the local observers via respective interfaces. Additionally or alternatively, such instructions may be provided to a user via the visualization component. The global observer enables the navigation through different views of analysis results in different time ranges, for different sites as well as cross-site analysis.

Hence, it may be understood that the enterprise-level observability system as disclosed herein consists of two main parts, one or more local observers and the global observer.

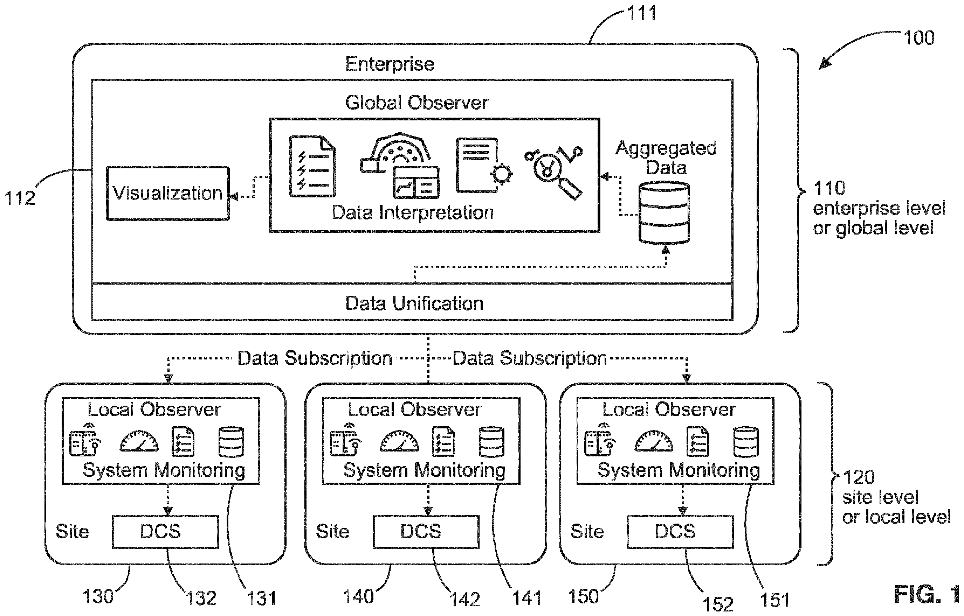

Accordingly, an example architecture is shown in Figure 1. In detail, Figure 1 schematically illustrates an architecture comprising a global observer and several local observers according to several examples of the present disclosure.

Figure 1 schematically illustrates an enterprise-level observability system 100 comprising a global level 110 and a site level or local level 120. An enterprise 111 in the global level 110 is associated with a global observer 112. Sites or production sides 130, 140 and 150 are arranged in the site level 120. Each production side 130, 140 and 150 comprises one corresponding local observer 131, 141 and 151, wherein each of these local observers 131, 141 and 151 is associated with one corresponding DCS 132, 142 and 152.

The enterprise-level observability system 100 according to several examples of the present disclosure provides an approach for leveraging observability data on an enterprise level or global level 110 and facilitating analysis and retrieval of such observability data, for example for visualization, while adhering to data protection requirements.

Hence, the enterprise-level observability system 100 according to several examples of the present disclosure collects locally collected and aggregated observability data from the DCSs 132, 142 and 152 deployed in different sites 130, 140 and 150, using subscription mechanisms for example. Observability data includes structured, string-based log messages, time-series-based metrics, and system traces describing component interactions. For a DCS, observability data reflects on the consumption of computing resources, using which control functions are executed.

On the site level 120, the local observer 131, 141 or 151, in more detail an aggregator and data exposure component of the local observer 131, 141 or 151, uses pre-defined aggregation thresholds to summarize unified data and to calculate average values for metrics as well as to detect peak values. The local observer 131, 141 or 151 performs temporal data aggregation and publishes it to the global observer 112, for example via secured interfaces to a local data base.

The global observer 112 or the global observer component may comprise a data unification component that formats received local observability data into a unified and neutral data structure for logs, metrics and traces. A data interpretation component of the global observer 112 may analyse aggregated data for anomalies and patterns. Based on this analysis and the derived knowledge, anomalies can be predicted for different sites 130, 140 and 150. Furthermore, based on a similarity analysis, the coverage of significant system components by observability collection agents is measured for different sites 130, 140 and 150. The results of this component can be visualized in different views. This can be a site-specific-view, a temporal local/global view as well as a data-type view for single or multiple sites 130, 140 and 150.

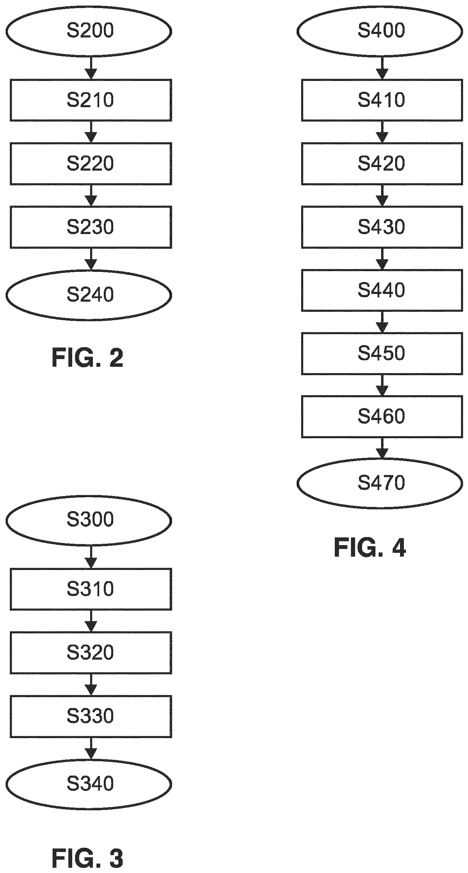

In view of the above, referring now to Figure 2, there is illustrated a flowchart indicative of a method according to several examples of the present disclosure. In more detail, there is provided a method for providing observability data in industrial plant.

The method is started in S200. In S210, the method comprises obtaining, at a first local observer 131 associated with a first distributed control system (DCS) 132 first data indicative of first observability data associated with the first DCS 132. In S220, the method comprises pre-processing the first data. In S230, the method comprises providing the pre-processed first data to a global observer 112 for joint processing of the pre-processed first data and pre-processed second data indicative of second observability data associated with a second DCS 142 (or 152). The method ends in S240.

Further, referring now to Figure 3, there is illustrated a flowchart indicative of a method according to several examples of the present disclosure. In more detail, there is provided a method for analysing observability data in industrial plant.

The method is started in S300. In S310, the method comprises obtaining, at a global observer 112 communicatively connected with a first local observer 131 associated with a first DCS 132 and a second local observer 141 (or 151) associated with a second DCS 142 (or 152), pre-processed first data indicative of first observability data associated with the first DCS 132 and pre-processed second data indicative of second observability data associated with the second DCS 142. In S320, the method comprises joint processing of the pre-processed first data and the pre-processed second data. In S330, the method comprises, based on a result of the joint processing, taking measures for supporting troubleshooting across the first DCS 132 and the second DCS 142. The method ends in S340.

Further, referring now to Figure 4, there is illustrated a flowchart indicative of a method according to several examples of the present disclosure. In more detail, there is provided a method for providing and analysing observability data in an observability system in industrial plant.

The method is started in S400. In S410, the method comprises obtaining at local observers 131, 142 and 152 each associated with a corresponding DCS 132, 142 and 152, respective data indicative of observability data associated with the corresponding DCSs132, 142 and 152. In S420, the method comprises pre-processing the respective data. In S430, the method comprises providing the pre-processed respective data to a global observer 112. In S440, the method comprises obtaining, at the global observer 112, the pre-processed respective data. In S450, the method comprises joint processing of the pre-processed respective data. In S460, the method comprises, based on a result of the joint processing, taking measures for supporting troubleshooting across the DCSs 132, 142 and 152. The method ends in S470.

In the following, according to several examples of the present disclosure, the local observer and the global observer are outlined in more detail.

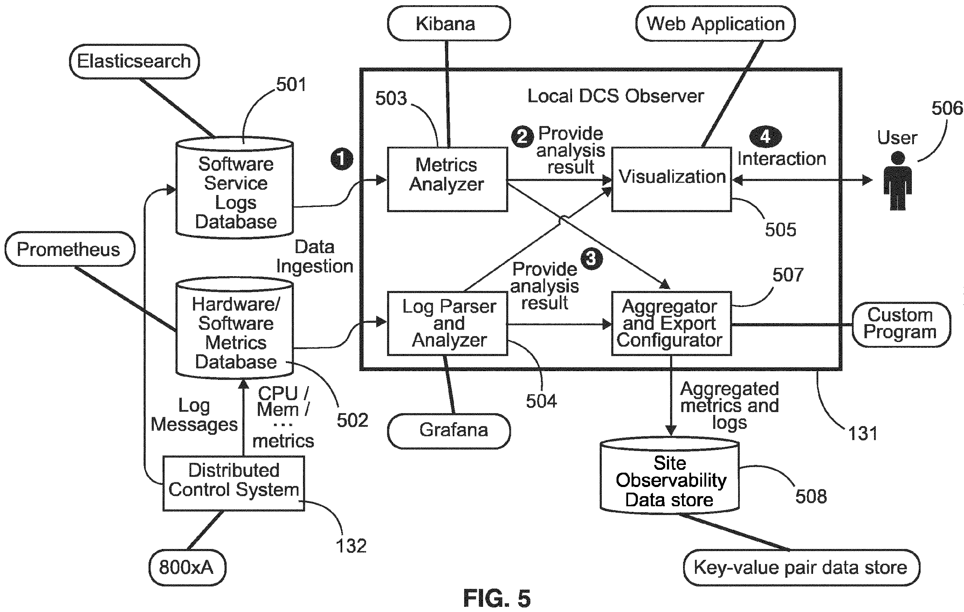

Thus, referring now to Figure 5, Figure 5 schematically illustrates a local observer according to several examples of the present disclosure.

The DCS 132 (or 142, 152), for example 800xA, consists of different system components, like software services and hardware for example, which are each monitored by generated logs and collected metrics. Logs reflect on expected or anomalous states via structured messages while metrics reflect on the CPU and memory consumption over time. Traces show the communication between system components for specific requests and their respective durations. Observability data reflect the system status and inner application behavior, i.e. regarding the DCS 132, and is used for diagnosis in case of failures.

Data collected by agents, i.e. continuously running software services on each host node, is stored in respective data bases, for example in a software service logs database 501 or a hardware/software metrics database 502. The log database 501 can be a document store (for example Elasticsearch), while metrics can be saved in timeseries databases comprising the metrics database 502 (for example Prometheus), where the source, time and value are saved for each data type (Step S1 as indicated in Figure 5). The local observer 131 or local DCS observer has a Metrics Analyzer 503, and a Log Parser and Analyzer 504. The Metrics Analyzer 503, for example Grafana based on Prometheus data, performs pre-processing and data cleaning, such that possibly missing metrics are compensated for or that inconsistent or duplicated values are filtered. Values retrieved by the metrics time-series database are analyzed over time. The Log Parser and Analyzer 504, for example using a Kibana processor, queries the textual input of log messages and performs classification based on recurrent fields, and log types comprising information, warning and error for example. Metrics for the log rate and log types are calculated to determine an average, which can be used as a threshold in case of an anomalous event indicated by a surge in the log rate.

The analysis results are available for visualization and can be queried via a visualization component 505 (Step S2 and Step S4 as indicated in Figure 5). The visualization component 505 can embed both the metric and the log view based on the visualization component's 505 interface to the respective software analyzing metrics (Metrics Analyzer 503) and logs (Log Parser and Analyzer 504). A web application for example can then provide the user 506 with a single interface to view both data types. Furthermore, analysis results are sent to the Aggregator and Export Configurator 507 (Step S3 as indicated in Figure 5), which can be a custom program for similar production sites for example. This component (i.e. the Aggregator and Export Configurator 507) exports data to allow the extraction of useful insights or analysis while reducing the amount of sensitive or identifiable information. To this end, data is filtered and aggregated in a way that sensitive information is omitted. For instance, location or operator-specific information may be filtered out or may be obfuscated to ensure data privacy. The needed degree of filtering and aggregation can be determined using differential privacy approaches. If filtering and aggregation alone is not sufficient to ensure data sensitivity, controlled randomness or noise may be inserted into the exported data. This noise makes it difficult for an external observer to derive sensitive information. The level of noise added is carefully calibrated to balance sensitivity and data utility. Logs and metrics are then grouped based on their temporal correlation and saved in the Site Observability Data store 508, which is a non-relational database providing interfaces for data subscription by the global observer 112. As the rate by which metrics and logs are generated might differ, an aggregation takes place, where a time interval can be selected by the user 506, for example an hourly basis. During this interval, the average values of metrics is calculated as well as that of log rates with the respective log types. Given a specific timestamp, the user 506 can then view the log rate, log type distribution as well as average metrics values. For more details, the user 506 can be directed to specific log messages or metrics in their respective data bases.

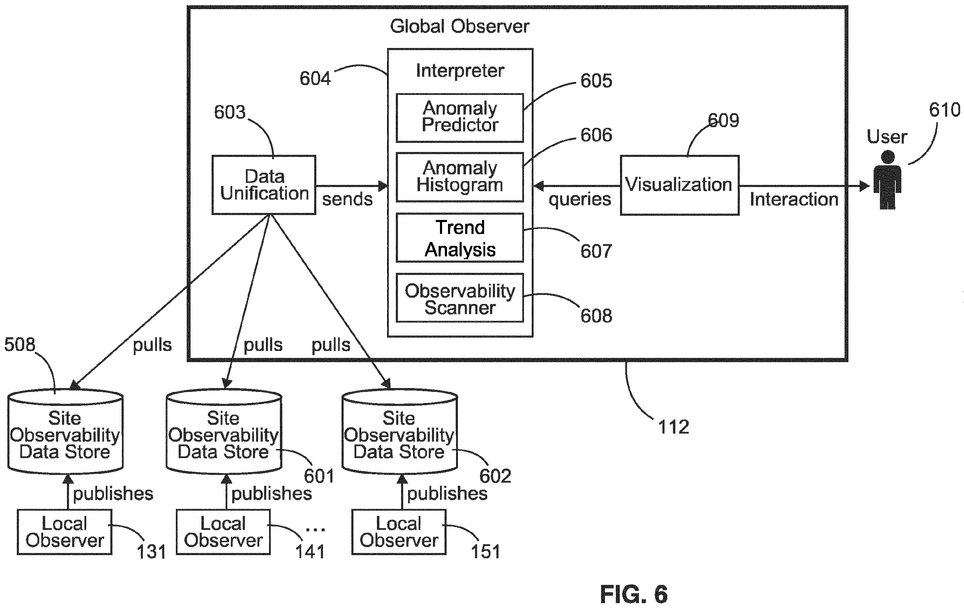

Referring now to Figure 6, Figure 6 schematically illustrates a global observer according to several examples of the present disclosure.

The global observer 112 can be hosted on a cloud and apply analytics services offered. Based on customer requests, global observer 112 can be an on-premise server with analytics services. The global observer 112 pulls data from multiple Site Observability Data stores 508, 601 and 602, and annotates them with an ID given to each site, like the sites 130, 140 and 150 for example. The internal identification of sites can apply security mechanisms, in case location or plant-specific data is sensitive for global exposure. The global observer 112 connects to the site observability data store 508, 601 and 602, which contains IT-related data. A possible extension is to include process data, which can be identified for different sites via OPC UA network discovery and share data from OPC UA servers on different sites130, 140 and 150.

A Data Unification component 603 is a component that stores data in a neutral format according to a pre-defined schema as a template to unify different data types, like logs, metrics and traces for example, by defining respective fields. The Interpreter 604 then analyzes incoming data with unified observability data across plants or sites. Values for a same observability data type are summarized, log entries are counted and average values for log rates and metrics such as CPU and memory utilizations are calculated and stored as global values for visualization on the global observer 112. Site information, which is permissible to share, can be found as meta information in the headers of the data unification template, for example, facilitating querying specific site observability data.

The Interpreter 604 uses aggregated data from the previous step to detect anomalies, by use of an anomaly predictor 605 and/or an anomaly histogram 606 for example, wherein anomalies are values above calculated averages, which can occur for specific sites. These anomalies are analyzed with respect to their temporal occurrence, their count as well as the percentage deviation from the average value. Using methods such as a sliding time window, the anomaly predictor 605 can predict future anomalies that could possibly occur for either the same site or other sites in case of a detected pattern, for example.

The trend analysis, provided by a trend analysis component 607, shows the distribution of anomalies over time across different sites to derive insights about possible causes. In this case, further contextualization and correlation methods can be applied. Contextualization can include temporal information as well as component information. A component failure for example can be known by respective log messages. Events occurring prior or post to the failure can be provided to the user 610 as possible indications for causes of failures or failure propagations. On a global observer level, contextualization can be cross-site in case of detected patterns or similarity, for example similar component failure in another site.

The Visualization component 609 enables users 610 to navigate through different views by querying available findings in an intuitive way. The results of the Interpreter 604 can be exported for reporting purposes. Analysis results can be queried either based on a specified time range or a site internal ID, for which anomalies are shown, predicted and trends visualized.

According to several examples of the present disclosure, the observability scanner 608 is another component within the interpreter 604. the observability scanner 608 uses fields reflecting the sources of logs and metrics from different data, and calculates a coverage score for similar sources. Sources are understood as software components on a host, node or application level within a virtualized environment. Similarities in the source field can be semantically analyzed, assuming similar or a same naming of system components is utilized by distributed control systems. The results of the observability scanner 608 can be made available to corresponding sites. These results can help operators and IT administrators to enhance employed observability data collection.

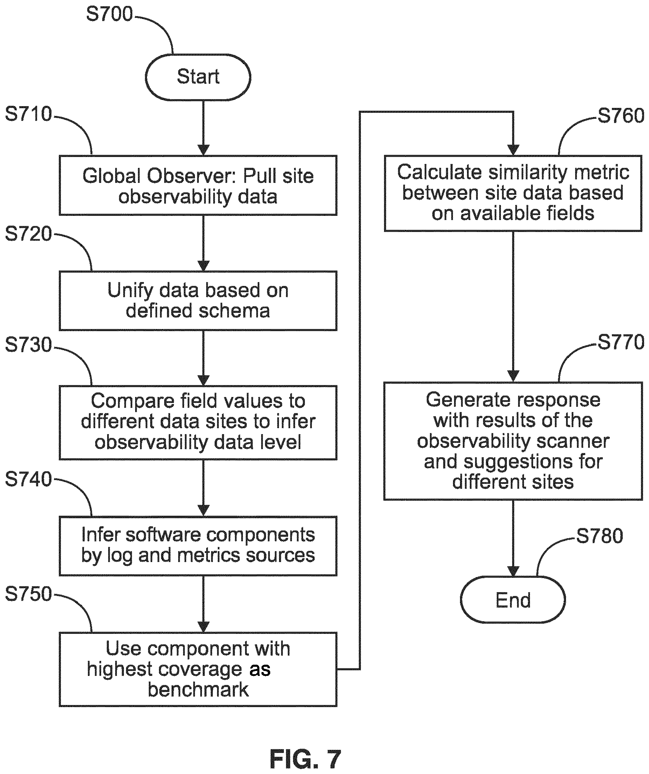

Referring now to Figure 7, Figure 7 illustrates a flowchart indicative of a method for observatory data coverage determination according to several examples of the present disclosure. Said in other words, Figure 7 shows a process of the observability scanner 608 according to several examples of the present disclosure.

The method starts in S700. In S710, the method comprises, at the global observer 112, to pull site observability data. In S720, the method comprises to unify the pulled data based on defined schema. In S730, the method comprises to compare field values associated with the unified data to different data sites to infer an observability data level. In S740, the method comprises to infer software components by log and metrics sources. In S750, the method comprises to use a component with highest coverage as benchmark. The component may represent a component among the components available across several sites. In S760, the method comprises to calculate a similarity metric between site data, based on available fields. In S770, the method comprises to generate a response with results of the observability scanner 608 and suggestions for different sites. The method ends in S780.

According to several examples of the present disclosure, there is provided a data processing apparatus applicable in an observability system in industrial plant, the data processing apparatus comprising a processor being configured to carry out the above-outlined method, methods and/or individual method steps as outlined with reference to any of Figures 1 to 7.

In more detail, according to various examples of the present disclosure, the data processing apparatus being configured to carry out the method according to any of Figures 2 to 4 or 7 may comprise a processing circuitry, a processing function, a processing means, a processing unit or a processor, which enables the data processing apparatus to be applicable in an observability system in industrial plant. The processor may comprise one or more processing portions or functions, wherein the processing portions or functions may be provided as one or more physical or virtual entities. The data processing apparatus may comprise one or more communication interfaces. The data processing apparatus may further comprise a memory or memory unit for storing data, programs and/or instructions to be executed by the processing unit. The memory may be a memory internal to the data processing apparatus or may be a memory external to the data processing apparatus, for example at a cloud server. The processor may comprise one or more portions, which enable the data processing apparatus to execute the method according to any of Figures 2 to 4 or 7, for example. According to several examples of the present disclosure, an obtaining portion may be configured to perform such obtaining according to S210 of Figure 2, a pre-processing portion may be configured to perform such pre-processing according to S220 of Figure 2, and a providing portion may be configured to perform such providing according to S230 of Figure 2. Additionally or alternatively, according to several examples of the present disclosure, an obtaining portion may be configured to perform such obtaining according to S310 of Figure 3, a joint processing portion may be configured to perform such joint processing according to S320 of Figure 3, and a taking measures portion may be configured to perform such taking measures according to S330 of Figure 3. Additionally or alternatively, according to several examples of the present disclosure, portions may be configured to perform such processing according to S710 to S770 of Figure 7.

The portions of the data processing apparatus may also be understood as being realized by means for carrying out the certain functions, for example.

Moreover, according to several examples of the present disclosure, there is provided a observability system or data processing system comprising a first data processing apparatus as outlined above and/or a second data processing apparatus as outlined above, the first data processing apparatus configured to carry out the method of Figure 2, the second data processing apparatus configured to carry out the method of Figure 3, and wherein the first data processing apparatus and the second data processing apparatus are directly or indirectly communicatively connected. Additionally or alternatively, the observability system or data processing system comprises means to carry out the method of Figure 4.

Furthermore, according to several examples of the present disclosure, there is provided an industrial automation system comprising the observability system as outlined above.

Moreover, according to several examples of the present disclosure, there is provided a computer-readable medium comprising instructions which, when executed by a computing system, cause the computing system to perform the method according to Figure 2 and/or the method according to Figure 3 and/or the method according to Figure 4 and/or the method according to Figure 7. The computer-readable medium may be transitory or non-transitory, volatile or non-volatile.

Moreover, according to several examples of the present disclosure, there is provided a computer program product comprising instructions which, when executed by a computing system, enable or cause the computing system to perform the method according to Figure 2 and/or the method according to Figure 3 and/or the method according to Figure 4 and/or the method according to Figure 7.

The method according to Figure 2 and/or the method according to Figure 3 and/or the method according to Figure 4 and/or the method according to Figure 7 may be computer implemented.

Optional features of the methods as outlined above with reference to any of Figures 1 to 7 may form part of any of the data processing apparatus, the observability system, the industrial automation system, the computer-readable medium, and the computer program product, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for providing observability data in industrial plant, the method comprising:
obtaining (S210), at a first local observer (131) associated with a first distributed control system, DCS, (132) first data indicative of first observability data associated with the first DCS (132);
pre-processing (S220) the first data; and
providing (S230) the pre-processed first data to a global observer (112) for joint processing of the pre-processed first data and pre-processed second data indicative of second observability data associated with a second DCS (142; 152).

2. The method according to claim 1, wherein the obtaining of the first data comprises collecting the first observability data, wherein the first observability data comprises at least one of a structured message, a string-based log message, a time-series-based metric, a system trace, and an indication about a consumption of computing resources.

3. The method according to claim 1 or 2, wherein the pre-processing comprises at least one of performing data aggregation, performing data cleaning, performing data filtering, performing time-series analysis, querying textual input of a string-based log message, performing classification based on recurrent fields, and performing classification based on a recurrent log type.

4. The method according to any of claims 1 to 3, wherein the pre-processing further comprises omitting sensitive information from the first data by at least one of aggregating the first data, filtering the first data, adding controlled randomness, and adding controlled noise.

5. The method according to any of claims 1 to 4, further comprising visualizing a result of the pre-processing to a user (506).

6. A method for analysing observability data in industrial plant, the method comprising:
obtaining (S310), at a global observer (112) communicatively connected with a first local observer (131) associated with a first distributed control system, DCS, (132) and a second local observer (141; 151) associated with a second DCS (142; 152), pre-processed first data indicative of first observability data associated with the first DCS (132) and pre-processed second data indicative of second observability data associated with the second DCS (142; 152);
joint processing (S320) of the pre-processed first data and the pre-processed second data; and
based on a result of the joint processing, taking measures (S330) for supporting troubleshooting across the first DCS (132) and the second DCS (142; 152).

7. The method according to claim 6, wherein the joint processing comprises
obtaining third data based on consolidating and/or aggregating and/or unifying the pre-processed first data and the pre-processed second data; and
analysing the obtained third data.

8. The method according to claim 7, wherein the analysing comprises detecting anomalies based on at least one of:
- executing cross-site analysis on the third data,
- executing a cross-site security breach detection on the third data,
- executing a cross-site anomaly detection on the third data,
- executing a cross-site anomaly prediction on the third data,
- deriving from the third data statistics related to the first DCS (132) and/or the second DCS (142; 152),
- analysing the derived statistics,
- deriving from the third data trends related to the first DCS (132) and/or the second DCS (142; 152),
- analysing the derived trends, and
- analysing an observability coverage based on the third data.

9. The method according to any of claims 6 to 8, wherein the taking measures comprises at least one of:
- setting, based on the third data, thresholds for metrics related to the first DCS (132) and/or the second DCS (142; 152),
- instructing changes to a data collection performed by the first local observer (131) and/or the second local observer (141; 151),
- instructing changes to a monitoring function of the first local observer (131) and/or the second local observer (141; 151), and
- visualizing the result of the joint processing to a user (610).

10. A method for providing and analysing observability data in an observability system (100) in industrial plant, the method comprising:
obtaining (S410), at local observers (131, 141, 151) each associated with a corresponding distributed control system, DCS, (132, 142, 152) respective data indicative of observability data associated with the corresponding DCSs (132, 142, 152);
pre-processing (S420) the respective data;
providing (S430) the pre-processed respective data to a global observer (112);
obtaining (S450), at the global observer (112), the pre-processed respective data;
joint processing (S460) of the pre-processed respective data; and
based on a result of the joint processing, taking measures (S470) for supporting troubleshooting across the DCSs.

11. A data processing apparatus (112; 131, 141, 151) applicable in an observability system in industrial plant, the data processing apparatus (112; 131, 141, 151) comprising a processor being configured to carry out the method of any of claims 1 to 5 or of any of claims 6 to 9.

12. An observability system (100) in industrial plant,
the observability system (100) comprising a first data processing apparatus (131, 141, 151) according to claim 11, which is configured to carry out the method of any of claims 1 to 5, and a second data processing apparatus (112) according to claim 11, which is configured to carry out the method of any of claims 6 to 9; and/or
the observability system (100) comprising means to carry out the method of claim 10.

13. The observability system (100) according to claim 12, wherein the first data processing apparatus (131; 141; 151) represents a local observer (131; 141; 151) and wherein the second data processing apparatus (112) represents a global observer (112),
the local observer (131; 141; 151) comprises a metrics analyzer (503), a log parser and analyer (504), a visualization component (505) and an aggregator and export configurator (507),
the metrics analyzer (503) is communicatively connected with the visualization (505) and the aggregator and export configurator (507), the log parser and analyer (504) is communicatively connected with the visualization component (505) and the aggregator and export configurator (507),
the metrics analyzer (503) has an interface to a software service logs database (501), the log parser and analyer (504) has an interface to a hardware/software metrics database (502), the aggregator and export configurator (507) has an interface to a site observability data store (508), and the visualization component (505) has an interface for communicating with a user (506),
the metrics analyzer (503) and the log parser and analyer (504) are configured to perform the obtaining via their interfaces to the databases (501, 502) and are configured to perform the pre-processing according to any of claims 1 to 5,
the aggregator and export configurator (507) is configured to perform the providing according to any of claims 1 to 5, based on storing data received from the metrics analyzer (503) and the log parser and analyer (504) in the site observability data store (508),
the visualization component (505) is configured to perform the visualizing according to claim 5,
the global observer (112) comprises a data unification component (603), an interpreter (604) and a visualization component (609),
the data unification component (603) is communicatively connected with the interpreter (604) and the interpreter (604) is communicatively connected with the visualization component (609),
the data unification component (603) has one or more interfaces to one or more site observability data store (508; 601; 602) corresponding to one or more local observer (131; 141; 151) and the visualization component (609) has an interface for communicating with a user (610),
the data unification component (603) is configured to perform the obtaining according to any of claims 6 to 9, based on pulling pre-processed data from the one or more site observability data store (508; 601; 602),
the interpreter (604) is configured to perform the joint processing according to any of claims 6 to 9, and
the interpreter (604) and/or the visualization component (609) are configured to perform the taking measures according to any of claims 6 to 9.

14. A computer-readable medium comprising instructions which, when executed by a computing system, cause the computing system to perform the method of any of claims 1 to 5 and/or to perform the method of any of claims 6 to 9 and/or to perform the method of claim 10.

15. A computer program product comprising instructions which, when executed by a computing system, enable and/or cause the computing system to perform the method of any of claims 1 to 5 and/or to perform the method of any of claims 6 to 9 and/or to perform the method of claim 10.
